# EUROPEAN PATENT APPLICATION

(11) **EP 3 819 101 A1**
(43) Date of publication of application: **12.05.2021**
(21) Application number: 19829967.9
(22) Date of filing: 05.06.2019
(51) Int. Cl.: B29C 64/336, B29C 64/129

(54) **THREE-DIMENSIONAL-MODELING DEVICE, CONTROL DEVICE, AND METHOD FOR MANUFACTURING MODELED OBJECT**

(30) Priority: 05.07.2018 JP 2018128299
(71) Applicant: Mitsui Chemicals, Inc., Minato-ku Tokyo 105-7122 (JP)
(72) Inventor: SHIODE Hirohisa, Sodegaura-shi, Chiba 299-0265 (JP); YAMANAKA Hiroshi, Sodegaura-shi, Chiba 299-0265 (JP)
(74) Representative: Hoffmann Eitle
(86) International application number: PCT/JP2019/022277
(87) International publication number: WO 2020/008788

(57) **Abstract**

A control unit (140) controls a position of a carrier (120) and an irradiation unit (130) to form a modeled object (200) obtained by curing a photocurable composition (20) . In addition, the control unit (140) controls the position of the carrier (120) and the irradiation unit (130) to form at least a part of a flow channel (230) connected to an outside of a container (110) by curing the photocurable composition (20) in a region irradiated with light, and controls the position of the carrier (120) and the irradiation unit (130) to at least temporarily provide at least one of an enlarged diameter portion and an opening portion. Here, the enlarged diameter portion is a part in which an inner diameter of the flow channel (230) is widened toward a tip end of the flow channel (230) on a side of a light transmission portion (112) . The opening portion is located on a side wall of the flow channel in a vicinity of the tip end (230).

## Description

### TECHNICAL FIELD

The present invention relates to a three-dimensional modeling apparatus, a control apparatus, and a method for manufacturing a modeled object.

### BACKGROUND ART

One of modeled object manufacturing apparatuses is a 3D printer for modeling by curing a composition for each cross section based on three-dimensional data of the modeled object.

Patent Document 1 discloses a technique for forming a three-dimensional object on a carrier by irradiating a polymerizable liquid between the carrier and a build plate with light via the build plate. In addition, Patent Document 1 discloses a technique for forming a supply conduit communicating with a flow channel in the carrier to supply the polymerizable liquid from the carrier.

### RELATED DOCUMENT

### PATENT DOCUMENT

[Patent Document 1] PCT Japanese Translation Patent Publication No. 2016-509963

### SUMMARY OF THE INVENTION

### TECHNICAL PROBLEM

However, in the technique disclosed in Patent Document 1, it is difficult to preferentially supply a polymerizable liquid to a place where the supply of the polymerizable liquid is specifically required.

The present invention provides a technique for effectively introducing an introduction substance into a desired modeling region of a three-dimensional modeling apparatus.

### SOLUTION TO PROBLEM

According to a first aspect of the present disclosure,
there is provided a three-dimensional modeling apparatus including
a container that accommodates a photocurable composition and at least a part of which includes a light transmission portion,
a carrier that is configured to have a variable distance with respect to the light transmission portion,
an irradiation unit that irradiates the photocurable composition between the carrier and the light transmission portion with light via the light transmission portion, and
a control unit that controls a position of the carrier and the irradiation unit to form a modeled object obtained by curing the photocurable composition,
in which the control unit
controls the position of the carrier and the irradiation unit to form at least a part of a flow channel connected to an outside of the container by curing the photocurable composition in a region irradiated with the light, and
controls the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.

According to a second aspect of the present disclosure,
there is provided a control apparatus of a three-dimensional modeling apparatus,
in which the three-dimensional modeling apparatus includes
a container that accommodates a photocurable composition and at least a part of which includes a light transmission portion,
a carrier that is configured to have a variable distance with respect to the light transmission portion, and
an irradiation unit that irradiates the photocurable composition between the carrier and the light transmission portion with light via the light transmission portion,
the control apparatus including a control unit that controls a position of the carrier and the irradiation unit to form a modeled object obtained by curing the photocurable composition,
in which the control unit
controls the position of the carrier and the irradiation unit to form at least a part of a flow channel connected to an outside of the container by curing the photocurable composition in a region irradiated with the light, and
controls the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.

According to a third aspect of the present disclosure,
there is provided a method for manufacturing a modeled object using a three-dimensional modeling apparatus,
in which the three-dimensional modeling apparatus includes
a container that accommodates a photocurable composition and at least a part of which includes a light transmission portion,
a carrier that is configured to have a variable distance with respect to the light transmission portion,
an irradiation unit that irradiates the photocurable composition between the carrier and the light transmission portion with light via the light transmission portion, and
a control unit that controls a position of the carrier and the irradiation unit to form the modeled object obtained by curing the photocurable composition, the method including:
by the control unit
controlling the position of the carrier and the irradiation unit to form at least a part of a flow channel connected to an outside of the container by curing the photocurable composition in a region irradiated with the light; and
controlling the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.

### ADVANTAGEOUS EFFECTS OF INVENTION

According to the present invention, it is possible to provide a technique for effectively introducing an introduction substance into a desired modeling region of a three-dimensional modeling apparatus.

### BRIEF DESCRIPTION OF THE DRAWINGS

The above-described object, other objects, features and advantages will be further clarified by the preferred embodiments described below and the accompanying drawings below, but are not limited to the detailed embodiments and the drawings.

Fig. 1 is a diagram illustrating a configuration of a three-dimensional modeling apparatus according to a first embodiment.
Fig. 2 is a diagram illustrating a structure of a modeled object and a flow channel formed by the three-dimensional modeling apparatus according to the first embodiment.
Fig. 3 is an enlarged view illustrating a first example of the structure of the flow channel according to the first embodiment.
Fig. 4 is an enlarged view illustrating a second example of the structure of the flow channel according to the first embodiment.
Fig. 5 is a diagram illustrating a modified example of the modeled object and the flow channel formed by the three-dimensional modeling apparatus according to the first embodiment.
Fig. 6A is a diagram illustrating a first example of a flow channel according to a second embodiment, and Fig. 6B is a diagram illustrating a second example of the flow channel according to the second embodiment.
Fig. 7 is a diagram illustrating structures of a modeled object and a flow channel formed by a three-dimensional modeling apparatus according to a third embodiment.
Fig. 8 is a diagram illustrating a first example of a timing chart of control performed by a control unit according to a fourth embodiment.
Fig. 9 is a diagram illustrating a second example of the timing chart of the control performed by the control unit according to the fourth embodiment.
Fig. 10 is a diagram illustrating a third example of the timing chart of the control performed by the control unit according to the fourth embodiment.
Fig. 11 is a diagram illustrating a fourth example of the timing chart of the control performed by the control unit according to the fourth embodiment.
Figs. 12A to Fig. 12C are views illustrating light irradiation patterns for modeling a side wall of the flow channel.
Fig. 13 is a diagram illustrating a configuration of a three-dimensional modeling apparatus according to a sixth embodiment.
Fig. 14 is a block diagram illustrating configurations of a three-dimensional modeling apparatus and a control apparatus according to a seventh embodiment.

### DESCRIPTION OF EMBODIMENTS

Hereinafter, embodiments of the present invention will be described with reference to the accompanying drawings. Also, throughout the drawings, the same components will be denoted by the same reference signs and the description thereof will not be repeated.

Note that, in the description below, a control unit 140 of a three-dimensional modeling apparatus 10 and a control unit 500 of a control apparatus 50 are shown as blocks in functional units instead of configurations in hardware units. The control unit 140 of the three-dimensional modeling apparatus 10 and the control unit 500 of the control apparatus 50 are realized by any combination of hardware and software based on a CPU, a memory, a program for realizing the components in this diagram that is loaded onto the memory, storage media such as a hard disk for storing the program, and an interface for network connection of any computer. Further, there are various modified examples for realization methods and apparatuses.

### (First Embodiment)

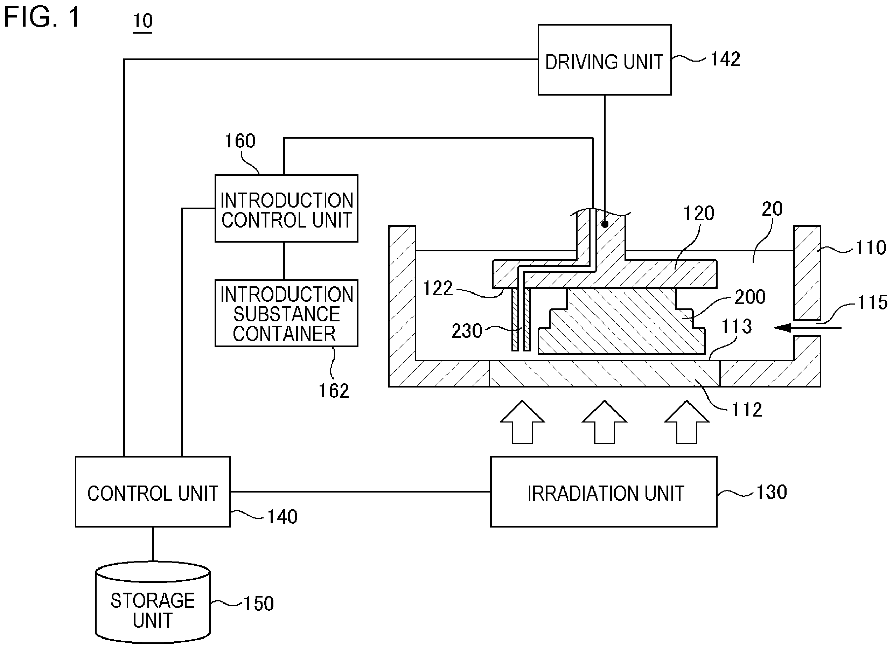

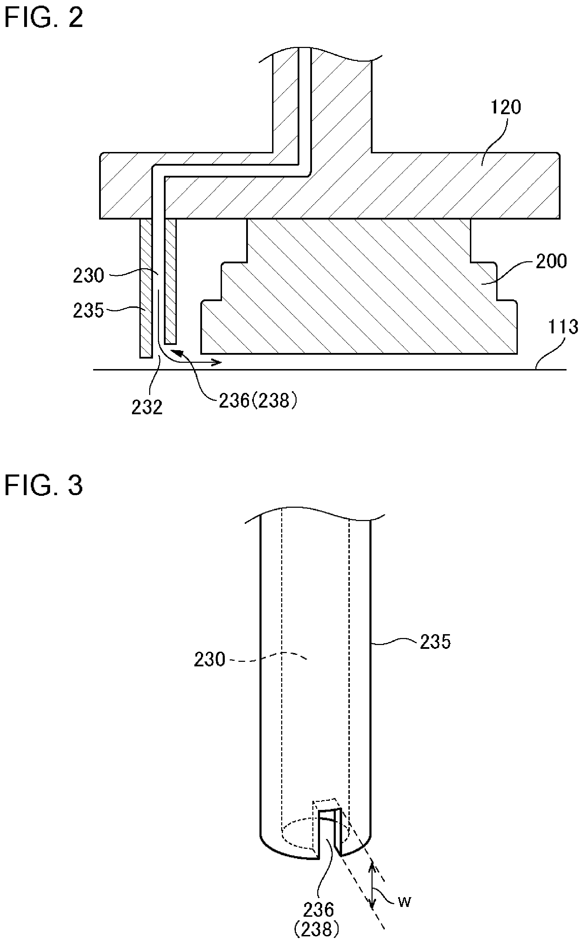

Fig. 1 is a diagram illustrating a configuration of a three-dimensional modeling apparatus 10 according to a first embodiment. In addition, Fig. 2 is a diagram illustrating structures of a modeled object 200 and a flow channel 230 formed by the three-dimensional modeling apparatus 10 according to the first embodiment. The drawing illustrates one state in a middle of modeling the modeled object 200. The three-dimensional modeling apparatus 10 according to the embodiment includes a container 110, a carrier 120, an irradiation unit 130, and a control unit 140. The container 110 accommodates a photocurable composition 20 and at least a part of which includes a light transmission portion 112. The carrier 120 is configured to have a variable distance with respect to the light transmission portion 112. The irradiation unit 130 irradiates the photocurable composition 20 between the carrier 120 and the light transmission portion 112 with light via the light transmission portion 112. The control unit 140 controls a position of the carrier 120 and the irradiation unit 130 to form the modeled object 200 obtained by curing the photocurable composition 20. In addition, the control unit 140 controls the position of the carrier 120 and the irradiation unit 130 to form at least a part of the flow channel 230 connected to an outside of the container 110 by curing the photocurable composition 20 in a region irradiated with light, and controls the position of the carrier 120 and the irradiation unit 130 to at least temporarily provide at least one of an enlarged diameter portion and the opening portion 238. Here, the enlarged diameter portion is a part in which an inner diameter of the flow channel 230 is widened toward a tip end 232 of the flow channel 230 on a side of the light transmission portion 112. The opening portion 238 is located on a side wall in a vicinity of the tip end 232 of the flow channel 230. Description will be performed in detail below.

The three-dimensional modeling apparatus 10 is an apparatus that cures the photocurable composition 20 based on three-dimensional data indicating a shape of the modeled object 200 to form the modeled object 200. Although the modeled object 200 is not particularly limited, the modeled object 200 may be at least one of a dental object and a medical object. The dental object and the medical object need to be precisely manufactured according to individual users, and thus a use of the three-dimensional modeling apparatus 10 is suitable.

The photocurable composition 20 is, for example, a resin composition having fluidity, and includes one or more selected from the group consisting of an acrylic resin, a methacrylic resin, a styrene resin, an epoxy resin, a urethane resin, an acrylate resin, an epoxy acrylate hybrid resin, an epoxy oxetane acrylate hybrid resin, a urethane acrylate resin, a methacrylate resin, a urethane methacrylate resin, and monomers of the resins. In addition, the photocurable composition 20 may include a polymerization initiator, a filler, a pigment, a dye, a cell, a cell growth factor, and the like.

The container 110 of the three-dimensional modeling apparatus 10 accommodates the photocurable composition 20. A part of the container 110 is provided with the light transmission portion 112 having a higher light transmissivity than other parts. The light transmission portion 112 is, for example, glass. A surface 113 is a surface provided in a surface of the light transmission portion 112 and on an inner side of the container 110. In the light transmission portion 112, light irradiated from an outside of the container 110 is transmitted to an inside of the container 110 with high efficiency. As a result, the photocurable composition 20 in a vicinity of the surface 113 is cured. In the example of the drawing, the container 110 has a bat shape. Further, the light transmission portion 112 is provided at a bottom of the container 110. In addition, an introduction hole 115 for introducing the photocurable composition 20 is provided on a side surface of the container 110.

The carrier 120 is a member that becomes a base for modeling. A surface 122 of the carrier 120 faces the surface 113 of the light transmission portion 112 in parallel. The three-dimensional modeling apparatus 10 according to the embodiment further includes a driving unit 142 that drives the carrier 120 at least in a direction perpendicular to the surface 113. A distance between the surface 122 and the surface 113 changes by driving the carrier 120.

When modeling the modeled object 200, the photocurable composition 20 cured in the vicinity of the surface 113 is laminated on the surface 122 of the carrier 120. Further, a three-dimensional structure is formed on the surface 122 by repeatedly curing and laminating the photocurable composition 20 while widening the distance between the surface 122 and the surface 113. In addition, in the drawing, the modeled object 200 illustrates a structure in the middle of the modeling.

Note that, similarly to the modeled object 200, a support portion that connects the modeled object 200 and the carrier 120 may be further formed between the carrier 120 and the light transmission portion 112. The support portion is removed after whole light irradiation is completed.

The carrier 120 is configured to include, for example, metal. The metal includes aluminum and stainless steel. In addition, the carrier 120 may include a surface layer. The surface layer includes, for example, an oxide layer of the above-mentioned metal, a hard coat layer obtained by curing a curable composition, a coating layer, and a resin layer. The resin layer includes polyethylene terephthalate (PET), polypropylene (PP), and the like. The resin layer can be formed on the carrier 120 by attaching, for example, a film or a sheet.

The irradiation unit 130 is configured to include, for example, a light source and an optical drawing system. Although the light source is not particularly limited, the light source may include, for example, an ultraviolet light source, an incandescent lamp, a fluorescent lamp, a phosphorescent lamp, a laser diode, or a light emitting diode. Although the optical drawing system is not particularly limited, the optical drawing system is configured to include at least one of, for example, a mask, a spatial light modulator, a micro mirror device, and a micro electro mechanical systems (MEMS) mirror array. In addition, the irradiation unit 130 includes a driving apparatus for the light source and the optical drawing system, and performs light irradiation on the photocurable composition 20 under the control of the control unit 140. The irradiation unit 130 may further include optical components such as a lens and a shutter.

By the irradiation unit 130, the light transmission portion 112 is irradiated with light from the light source via the optical drawing system. When light output from the irradiation unit 130 is a light beam, the light irradiation region is scanned with the light beam, and the photocurable composition 20 in the scanned light irradiation region is cured. In addition, light may be simultaneously projected onto a whole or a part of the light irradiation region from the irradiation unit 130.

The control unit 140 controls the irradiation unit 130 and the driving unit 142. The three-dimensional modeling apparatus 10 further includes a storage unit 150, and the storage unit 150 holds information indicating a three-dimensional shape of a structure to be modeled in advance. The control unit 140 reads the information indicating the three-dimensional shape from the storage unit 150, and generates light irradiation information including information indicating a plurality of light irradiation regions. Here, each light irradiation region is a region, on which the light irradiation should be performed, by the irradiation unit 130, and corresponds to a cross-sectional shape parallel to the surface 113 of the structure to be modeled. Further, the light irradiation information includes information indicating the plurality of light irradiation regions, together with information indicating an order of light irradiation. Note that, the light irradiation information is not limited to being generated by the control unit 140 and may be generated externally in advance and held in the storage unit 150. In addition, the light irradiation information may include information indicating the position of the carrier 120 associated with the information indicating each light irradiation region.

In the embodiment, each light irradiation region includes at least one of a pattern for modeling the modeled object 200, a pattern for modeling a side wall 235 of the flow channel 230, and a pattern for modeling the support portion. Note that, a part of the flow channel 230 may be provided inside the support portion.

The control unit 140 controls the irradiation unit 130 such that the light irradiation is sequentially performed on the light irradiation regions based on the light irradiation information. In addition, the control unit 140 controls the driving unit 142 to change the distance between the light transmission portion 112 and the surface 113 according to a light irradiation timing of each light irradiation region. As a result, the modeled object 200 is formed between the carrier 120 and the surface 113.

Note that, the distance between the surface 122 and the surface 113 may change continuously or intermittently. When the distance changes intermittently, the control unit 140 widens the distance corresponding to one layer according a switching timing of the light irradiation region. When a plurality of layers are formed in this manner, the modeled object 200 is obtained as a laminated structure. The amount of change in the distance corresponding to one layer is, for example, equal to or larger than 30 µm and equal to or less than 100 µm. On the other hand, when the distance changes continuously, the control unit 140 switches the light irradiation region according to a changing speed of the distance and a curing speed of the photocurable composition 20. In this manner, the modeled object 200 having a smooth surface rather than the case where the distance changes intermittently may be obtained.

In addition, the control unit 140 may control the distance between the surface 122 and the surface 113 to be temporarily shortened. In this manner, the photocurable composition 20 is stirred or the photocurable composition 20 easily enters between the surface 122 and the surface 113.

In the embodiment, the control unit 140 controls the position of the carrier 120 and the irradiation unit 130 to further provide the flow channel 230 whose at least one part is provided separately from the modeled object 200. Here, a fact that the flow channel 230 is provided separately from the modeled object 200 indicates not a structure in which the flow channel 230 is included in a target modeled object 200 but a structure in which the flow channel 230 is removed from the modeled object 200 after the whole light irradiation is completed. Note that, before the flow channel 230 is removed from the modeled object 200, the side wall 235 of the flow channel 230 may be connected to the modeled object 200 or a part of the side wall 235 may serve as a part of the modeled object 200. Note that, as long as contributing to a flow of the introduction substance, a degree of curing of the side wall 235 of the flow channel 230 is not particularly limited. In addition, a shape of the cross section parallel to the surface 113 of the flow channel 230 is not particularly limited, and may be a circular, polygonal, or the like. Although a thickness of the side wall 235 of the flow channel 230 is not particularly limited, the thickness is, for example, equal to or larger than 30 µm and is equal to or less than 1 mm.

While modeling the modeled object 200, the tip end 232 on one side of the flow channel 230 is at least temporarily located in a vicinity of the surface 113. Further, the introduction substance having fluidity is introduced into the region irradiated with light by the flow channel 230. The flow channel 230 includes a first part configured with a cured substance of the photocurable composition 20 and a second part configured with a substance other than the cured substance of the photocurable composition 20. The second part of the flow channel 230 is provided, for example, inside the carrier 120. In addition, the second part of the flow channel 230 may be configured by a pipe provided outside the carrier 120. A side opposite to the tip end 232 of the flow channel 230 is connected to the outside of the container 110. The outside of the container 110 is an outer side of a space of the container 110 that accommodates the photocurable composition 20. In the embodiment, the three-dimensional modeling apparatus 10 further includes an introduction control unit 160 and an introduction substance container 162. The flow channel 230 is connected to the introduction control unit 160. Specifically, the first part of the flow channel 230 is connected to the introduction control unit 160 via the second part.

The introduction substance container 162 is a container that accommodates the introduction substance. In addition, the introduction control unit 160 controls supply of the introduction substance from the introduction substance container 162 to the flow channel 230 based on the control performed by the control unit 140. The introduction control unit 160 is configured to include, for example, a valve and a pump.

In Fig. 2, a flow of the introduction substance is illustrated by an arrow. The introduction substance is a composition which is the same as the photocurable composition 20 or a substance different from the photocurable composition 20.

For example, the control unit 140 controls the position of the carrier 120 and the irradiation unit 130 such that at least one of the enlarged diameter portion 234 and the opening portion 238 is provided in the vicinity of the tip end 232 at least when modeling the first region having the largest cross-sectional area parallel to the surface 113 of the light transmission portion 112 on the side of the carrier 120 in the modeled object 200.

When the first region is formed, it is necessary to spread the photocurable composition 20 in a wide region between the cured substance of the photocurable composition 20, which is formed immediately before, and the surface 113, and introduction of the introduction substance via the flow channel 230 effectively contributes to form the first region.

In addition, the flow of the photocurable composition 20 in the container 110 can be controlled by appropriately disposing the flow channel 230 and introducing the introduction substance. As a result, the modeled object 200 can be accurately modeled. Note that, when the introduction substance is the same composition as the photocurable composition 20, the container 110 may serve as the introduction substance container 162.

In addition, when the introduction substance is a substance different from the photocurable composition 20, the introduction substance is, for example, a photocurable composition having a composition different from the photocurable composition 20 or a non-photocurable additive. The introduction substance may include, for example, at least any of fillers, cells, and cell growth factors. As described above, when the introduction substance is the substance different from the photocurable composition 20, only a part of the modeled object 200 can be formed of a composition or material different from the other parts or can control the curing of the photocurable composition 20.

Specifically, as a component (hereinafter, referred to as a "component A") that becomes a factor which hinders photo modeling, there is a component, such as a filler, a cell, or a cell growth factor, that does not have photo-curability or a function of promoting the photo-curability. When the component A is introduced into the modeled object 200, the flow channel 230 is disposed around a portion desired to be introduced, and the component A is preferentially supplied to the periphery of the portion desired to be introduced, sufficient photo modeling can be realized as a whole, while the component A is introduced to the necessary portion.

Fig. 3 is an enlarged view illustrating a first example of the structure of the flow channel 230 according to the embodiment. In the drawing, the vicinity of the tip end 232 of the flow channel 230 is enlarged to be illustrated. In the embodiment, an example in which the opening portion 238 is provided in the side wall 235 of the flow channel 230 will be described. The opening portion 238 penetrates the side wall 235 to connect an inside and an outside of the flow channel 230. In a case where the opening portion 238 is provided, the introduction substance from the flow channel 230 is preferentially discharged in a direction in which the opening portion 238 is located in the vicinity of the tip end 232. Therefore, the introduction substance can be effectively introduced into a desired region. In addition, according to the embodiment, many introduction substances can be introduced into the light irradiation region via the opening portion 238.

In the example of the drawing, the opening portion 238 is a notch portion 236. The notch portion 236 is a part having a shape obtained by removing a part of the side wall 235 of the flow channel 230. A part of an outer periphery of the notch portion 236 is a part on the side of the tip end 232 which is not surrounded by the side wall 235. The control unit 140 cures the photocurable composition 20 so that the shape of the notch portion 236 is formed to model the side wall 235. The notch portion 236 penetrates the side wall 235 and connects the flow channel 230 to an external space. In addition, one end of the notch portion 236 is open to a side of the surface 113.

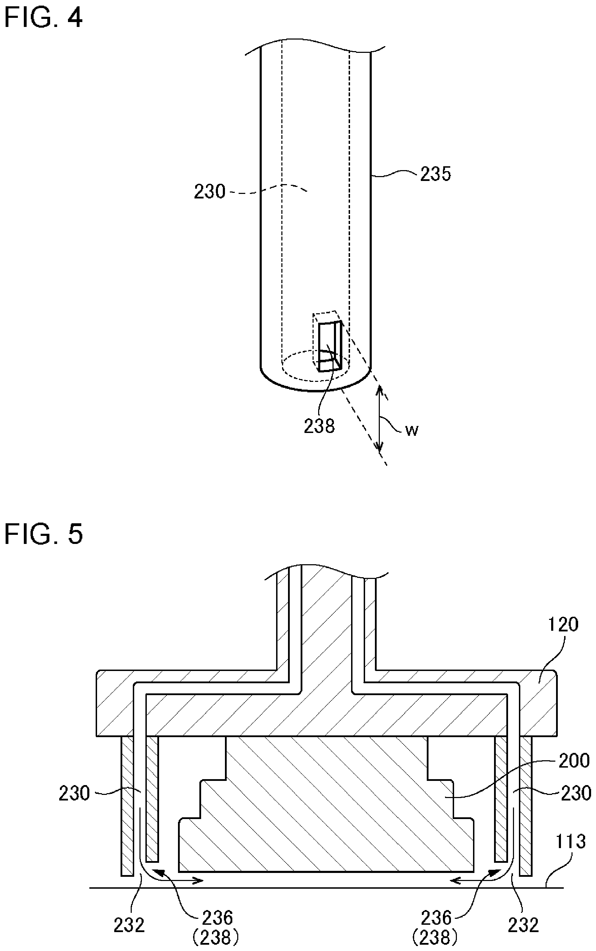

Fig. 4 is an enlarged view illustrating a second example of the structure of the flow channel 230 according to the embodiment. In the drawing, the vicinity of the tip end 232 of the flow channel 230 is enlarged to be illustrated. In the example, the opening portion 238 is not the notch portion 236. That is, a whole outer periphery of the opening portion 238 is surrounded by the side wall 235. A shape of the opening portion 238 is not particularly limited, and is, for example, a polygon such as a rectangle or a circle.

The opening portion 238 will be described in more detail below. Note that, hereinafter, whether or not the opening portion 238 is the notch portion 236 is not matter. A width of the opening portion 238 in a direction perpendicular to the surface 113 is w. That is, at a timing in which the introduction substance is introduced in the flow channel 230, the width from an end of the opening portion 238 farthest from the tip end 232 to the tip end 232 is w. Although w is not particularly limited, w is, for example, equal to or less than 500 µm. In addition, when the modeled object 200 includes a plurality of layers formed for respective distances between the light transmission portion 112 and the carrier 120, w is, for example, a length which is equal to or less than a size corresponding to five layers.

In addition, when the distance between the surface 113 and the surface 122 is d in a case where the light irradiation initially starts, w is, for example, equal to or less than 5 times of d.

When the introduction substance is introduced from the opening portion 238, an opening facing the surface 113 may or may not be provided at the tip end 232 of the flow channel 230. However, from a viewpoint of securing an introduction amount, it is preferable that the opening is provided. In addition, after the introduction substance is introduced from the flow channel 230, the flow channel 230 may not be further modeled or may be modeled to close the opening. In addition, when the opening portion 238 is the notch portion 236, the notch portion 236 may be left as the opening of the side wall 235 with extension of the flow channel 230. The opening may or may not be used to introduce the introduction substance as the opening portion 238. In addition, another flow channel formed outside the side wall 235 may be connected to an opening derived from the notch portion 236 to block or guide the introduction substance flowing out from the opening.

While the modeled object 200 is modeled, only one opening portion 238 may be formed or a plurality of opening portions 238 may be formed in one flow channel 230. When the plurality of opening portions 238 are formed, it is not necessary that shapes thereof are the same as each other. In addition, a plurality of opening portions 238 facing different directions may be simultaneously formed in one flow channel 230.

Fig. 5 is a diagram illustrating a modified example of the modeled object 200 and the flow channel 230 formed by the three-dimensional modeling apparatus 10 according to the first embodiment. In the drawing, a flow of an introduction substance is illustrated by an arrow. In the modified example, the control unit 140 controls the position of the carrier 120 and the irradiation unit 130 to provide a plurality of flow channels 230. In this manner, the introduction substance can be introduced from a plurality of spots or at a plurality of timings by using the plurality of flow channels 230. As a result, the introduction substance can be introduced into a plurality of regions.

Note that, a state in which the plurality of flow channels 230 are provided indicates that at least the tip end 232 of the flow channels 230 is divided into a plurality of parts. That is, a plurality of flow channels 230 may be connected to each other in the middle.

In addition, the introduction substance introduced via the plurality of flow channels 230 may include two or more types of introduction substances. When a plurality of types of introduction substances are used, the three-dimensional modeling apparatus 10 may include a plurality of introduction substance containers 162. In addition, when the plurality of flow channels 230 are provided, the three-dimensional modeling apparatus 10 may include a plurality of introduction control units 160. The introduction of the introduction substance to the plurality of flow channels 230 may be controlled by different introduction control units 160 or the introduction of the introduction substance to the plurality of flow channels 230 may be controlled by one introduction control unit 160. In addition, the introduction substance in the flow channel 230 may be mixed with the introduction substance of another flow channel 230 in the flow channel 230.

At least a part of the side walls 235 of the plurality of flow channels 230 may be integrated. For example, a plurality of flow channels 230 may be configured to have an appearance which is a single tube and whose inside is divided into a plurality of parts.

Hereinafter, a method for manufacturing the modeled object 200 according to the embodiment will be described. The method for manufacturing the modeled object 200 according to the embodiment is a method for manufacturing the modeled object 200 using the three-dimensional modeling apparatus 10 as described above.

Prior to modeling, the storage unit 150 holds three-dimensional data of the modeled object 200. In addition, based on the three-dimensional data of the modeled object 200 and the shape of the flow channel 230, the light irradiation information for forming the modeled object 200 and the flow channel 230 is generated.

Further, the carrier 120 is disposed in the vicinity of the light transmission portion 112 of the container 110 in which the photocurable composition 20 is accommodated. At this time, the distance d between the surface 122 and the surface 113 is, for example, equal to or larger than 30 µm and equal to or less than 100 µm.

Next, the control unit 140 causes the light is irradiated from the irradiation unit 130 toward the light transmission portion 112 such that light irradiation is performed on an initial light irradiation region based on the light irradiation information. The photocurable composition 20 between the surface 122 and the surface 113 is irradiated with the light from the irradiation unit 130 via the light transmission portion 112. Therefore, the photocurable composition 20 between the surface 122 and the surface 113 is cured into a shape of the light irradiation region and the cured substance adheres to the surface 122.

Subsequently, the control unit 140 sequentially performs light irradiation on the plurality of light irradiation regions based on the light irradiation information. At the same time, as described above, the control unit 140 controls the driving unit 142 to change the distance between the surface 122 and the surface 113. The cured substance of the photocurable composition 20 newly formed by the light irradiation is laminated on the cured substance of the photocurable composition 20 formed immediately before. Note that, the cured substance of the photocurable composition 20 at the stage may be in a semi-cured state.

The opening portion 238 is at least temporarily formed at the tip end 232 of the flow channel 230 while the modeled object 200 is modeled. Further, the control unit 140 controls the introduction control unit 160 to supply the introduction substance to the flow channel 230. Further, the introduction substance is introduced to the region, on which the light irradiation is performed, from the opening of the tip end 232 of the flow channel 230 and the opening portion 238. In addition, when the light irradiation performed on the region, in which introduction of the introduction substance is necessary, is completed, the control unit 140 controls the introduction control unit 160 to stop the supply of the introduction substance.

After the light irradiation is performed on the last light irradiation region, the side wall 235 and the modeled object 200 are removed from the carrier 120. In addition, the side wall 235 is removed. Thereafter, there is a case where the modeled object 200 is post-cured. In this way, the modeled object 200 is obtained.

Note that, when a part of the side wall 235 serves as a part of the modeled object 200, a groove may remain on the surface of the modeled object 200 after the flow channel 230 is removed.

Next, an operation and effect of the embodiment will be described. According to the embodiment, the introduction substance can be preferentially introduced into the desired region by the opening portion 238. As a result, for example, the modeling accuracy of the modeled object 200 can be increased, the composition or the material can be partially changed, or the curing can be controlled.

### (Second Embodiment)

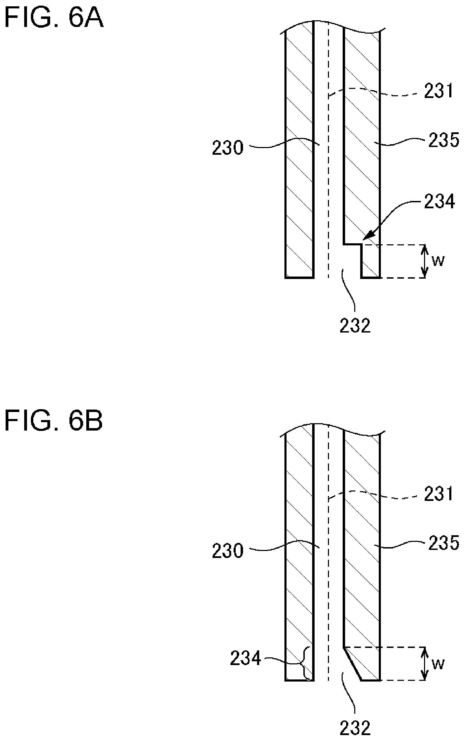

Fig. 6A is a diagram illustrating a first example of a flow channel 230 according to a second embodiment, and Fig. 6B is a diagram illustrating a second example of the flow channel 230 according to the second embodiment. Fig. 6A and Fig. 6B are cross-sectional views illustrating a vicinity of a tip end 232 of the flow channel 230. A three-dimensional modeling apparatus 10 according to the embodiment is the same as the three-dimensional modeling apparatus 10 according to the first embodiment except that the control unit 140 controls the position of the carrier 120 and the irradiation unit 130 to at least temporarily provide the enlarged diameter portion 234 in which the inner diameter of the flow channel 230 is widened toward the tip end 232 of the flow channel 230 on the side of light transmission portion 112. Note that, the inner diameter of the flow channel 230 is a diameter in a cross section parallel to the surface 113.

In the enlarged diameter portion 234, the inner diameter of the flow channel 230 is anisotropically widened. More specifically, in the enlarged diameter portion 234, the inner diameter of the flow channel 230 is anisotropically widened based on an axis 231 of the flow channel 230. Here, the axis 231 is an axis extending in a length direction of the flow channel 230. In a cross section parallel to the surface 113 at an end portion of the enlarged diameter portion 234 on a side opposite to the tip end 232, the axis 231 is located at a center of the flow channel 230. Since the flow channel 230 is anisotropically widened as above, the introduction substance from the flow channel 230 is preferentially discharged in a specific direction, in which the flow channel 230 is widened, at the tip end 232. Therefore, the introduction substance can be effectively introduced into a desired region.

The enlarged diameter portion 234 is a part at which the diameter changes. In the enlarged diameter portion 234, the inner diameter of the flow channel 230 may be widened by degrees or may be continuously widened. Fig. 6A illustrates an example in which the inner diameter of the flow channel 230 is widened by degrees, and Fig. 6B illustrates an example in which the inner diameter of the flow channel 230 is continuously widened. In the embodiment, the side wall 235 of the enlarged diameter portion 234 is not penetrated.

The control unit 140 controls the introduction control unit 160 to introduce the introduction substance at a timing in which the enlarged diameter portion 234 is located in the vicinity of the tip end 232. At the timing in which the introduction substance is introduced from the flow channel 230, the width from the end of the enlarged diameter portion 234 farthest from the tip end 232 to the tip end 232 is w. Although w is not particularly limited, w is, for example, equal to or less than 500 µm. In addition, when the modeled object 200 includes a plurality of layers formed for respective distances between the light transmission portion 112 and the carrier 120, w is, for example, a length which is equal to or less than a size corresponding to five layers. In addition, w may be, for example, equal to or less than 5 times of the above-described d.

At the timing in which the introduction substance is introduced from the flow channel 230, the diameter of the opening of the tip end 232 of the flow channel 230 is a diameter after being widened in the enlarged diameter portion 234, and the diameter between the enlarged diameter portion 234 and the tip end 232 is not reduced. In the example of Fig. 6B, one end of the enlarged diameter portion 234 coincides with the tip end 232.

In the embodiment, the opening facing the surface 113 is provided at the tip end 232 of the flow channel 230 when the introduction substance is introduced from the flow channel 230. Further, after the introduction substance is introduced from the flow channel 230, the flow channel 230 may not be further modeled or may be modeled to continuously extend the flow channel 230. In addition, the flow channel 230 may be modeled to close the opening of the tip end 232. In addition, in the embodiment, when the flow channel 230 is continuously modeled, the diameter widened at the enlarged diameter portion 234 may be maintained or the diameter may be reduced.

While the modeled object 200 is modeled, only one enlarged diameter portion 234 may be formed or a plurality of enlarged diameter portions 234 may be formed in one flow channel 230. When the plurality of enlarged diameter portions 234 are formed, it is not necessary that shapes thereof are the same as each other. In addition, a plurality of enlarged diameter portions 234 facing different directions may be simultaneously formed in one flow channel 230.

In the method for manufacturing the modeled object 200 according to the embodiment, the enlarged diameter portion 234 is formed at least temporarily in the flow channel 230 while the modeled object 200 is modeled. Further, the control unit 140 controls the introduction control unit 160 to supply the introduction substance to the flow channel 230 when the enlarged diameter portion 234 is in the vicinity of the tip end 232. Further, the introduction substance is introduced into the region, on which the light irradiation is performed, from the opening of the tip end 232 of the flow channel 230. In addition, when the light irradiation performed on the region, in which introduction of the introduction substance is necessary, is completed, the control unit 140 controls the introduction control unit 160 to stop the supply of the introduction substance.

Note that, also in the embodiment, similarly to the first embodiment, a plurality of flow channels 230 may be provided.

In addition, the control unit 140 may control the carrier 120 and the irradiation unit 130 to provide both the opening portion 238 and the enlarged diameter portion 234 which are described in the first embodiment.

Next, an operation and effect of the embodiment will be described. According to the embodiment, the introduction substance can be preferentially introduced into the desired region by the enlarged diameter portion 234. As a result, for example, the modeling accuracy of the modeled object 200 can be increased, the composition or the material can be partially changed, or the curing can be controlled. In addition, according to the embodiment, the introduction direction of the introduction substance can be controlled by the enlarged diameter portion 234 without providing the opening in the side wall 235. Therefore, it is easy to repeatedly use the same flow channel 230.

### (Third Embodiment)

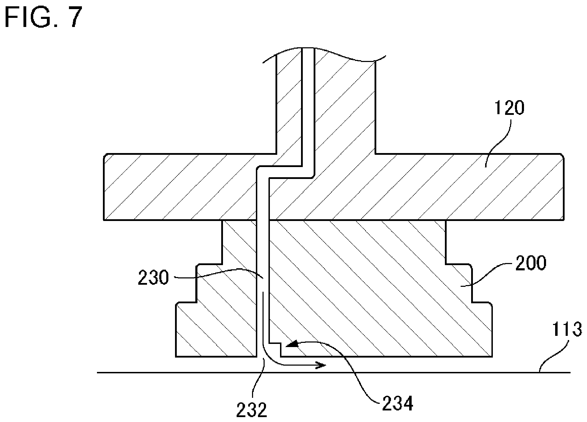

Fig. 7 is a diagram illustrating structures of a modeled object 200 and a flow channel 230 formed by a three-dimensional modeling apparatus 10 according to a third embodiment. In the drawing, a flow of an introduction substance is illustrated by an arrow. The three-dimensional modeling apparatus 10 according to the embodiment is the same as the three-dimensional modeling apparatus 10 according to at least any of the first embodiment and the second embodiment except that at least a part of the flow channel 230 is provided inside the modeled object 200. Description will be performed in detail below.

In the embodiment, the flow channel 230 is provided inside the modeled object 200 and remains inside the modeled object 200. The flow channel 230 may be specifically provided for an object of introducing the introduction substance into the modeled object 200, or may be the flow channel 230 using a structure of being formed in the modeled object 200 for another object such as piping or improving a fine view. Note that, a part of the flow channel 230 may be provided inside the modeled object 200, and another part may be provided separately from the modeled object 200. In the flow channel 230 provided inside the modeled object 200, the side wall 235 of the flow channel 230 is a part of the modeled object 200.

Also in the embodiment, a control unit 140 controls a carrier 120 and an irradiation unit 130 so that at least one of an enlarged diameter portion 234 and an opening portion 238 is provided at least temporarily. In addition, the control unit 140 controls an introduction control unit 160 according to a timing of providing at least one of the enlarged diameter portion 234 and the opening portion 238, and introduces the introduction substance into a light irradiation region. The drawing illustrates an example in which the enlarged diameter portion 234 is provided.

In a method for manufacturing the modeled object 200 according to the embodiment, it is not necessary to remove a side wall 235 after light irradiation is performed on a last light irradiation region.

Next, an operation and effect of the embodiment will be described. In the embodiment, the same operation and effect as at least any of the first and second embodiments may be obtained. In addition, the flow channel 230 can be formed without separately providing the side wall 235.

### (Fourth Embodiment)

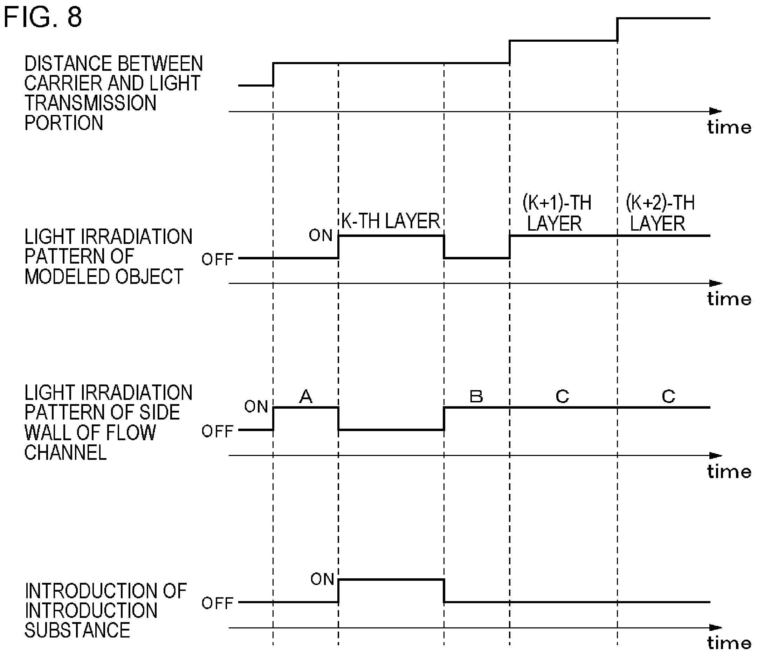

Figs. 8 to 11 are diagrams illustrating first to fourth examples of timing charts of control performed by a control unit 140 according to a fourth embodiment. A three-dimensional modeling apparatus 10 according to the embodiment is the same as the three-dimensional modeling apparatus 10 according to at least any of the first to third embodiments except points described below.

In the embodiment, the control unit 140 controls a position of a carrier 120 and an irradiation unit 130 to fill at least one of an enlarged diameter portion 234 and an opening portion 238.

In the embodiment, a modeled object 200 is configured with a plurality of layers formed for each distance between the carrier 120 and a light transmission portion 112. A width w of at least one of the enlarged diameter portion 234 and an opening portion 238 in a lamination direction of the plurality of layers is, for example, equal to or less than a size corresponding to five layers. In addition, a width w from an end of the enlarged diameter portion 234 or the opening portion 238 farthest from the tip end 232 to the tip end 232is, for example, equal to or less than 500 µm. w may be, for example, equal to or less than 5 times of the above-described d.

In the three-dimensional modeling apparatus 10 according to the embodiment, after an introduction substance is introduced from the enlarged diameter portion 234 or the opening portion 238, the enlarged diameter portion 234 or the opening portion 238 is filled with a cured substance of a photocurable composition 20. Specifically, for the enlarged diameter portion 234, a region for enlarging a diameter of the enlarged diameter portion 234 is filled, and the enlarged diameter portion 234 disappears. In addition, for the opening portion 238, the opening portion 238 of a side wall 235 is filled, and an inside and an outside of the flow channel 230 are divided by the side wall 235 in a direction parallel to a surface 113 at a filled part. From a viewpoint of ease of filling, it is preferable that the opening portion 238 is a notch portion 236. When the flow channel 230 is continuously modeled after the notch portion 236 is filled, no opening resulting from the notch portion 236 is formed on the side wall 235.

An example of control performed by the control unit 140 to fill the notch portion 236 will be described below with reference to Figs. 8 to 11. Note that, hereinafter, a case will be described as an example where the modeled object 200 is configured with a plurality of layers formed for each distance between the carrier 120 and the light transmission portion 112. As described in the first embodiment, a light irradiation pattern for each layer is determined for modeling the modeled object 200. Further, the distance between the carrier 120 and the light transmission portion 112 is associated with the light irradiation pattern of the modeled object 200. In addition, the control unit 140 controls the distance between the carrier 120 and the light transmission portion 112 according to the light irradiation pattern. Hereinafter, it is assumed that k is an integer, which is equal to or larger than 1, and the light irradiation is performed on a k-th layer, a (k+1)-th layer, and a (k+2)-th layer in this order. In addition, it is assumed that the distance between the carrier 120 and the light transmission portion 112, which is obtained when the light irradiation is performed on each layer, is short in this order.

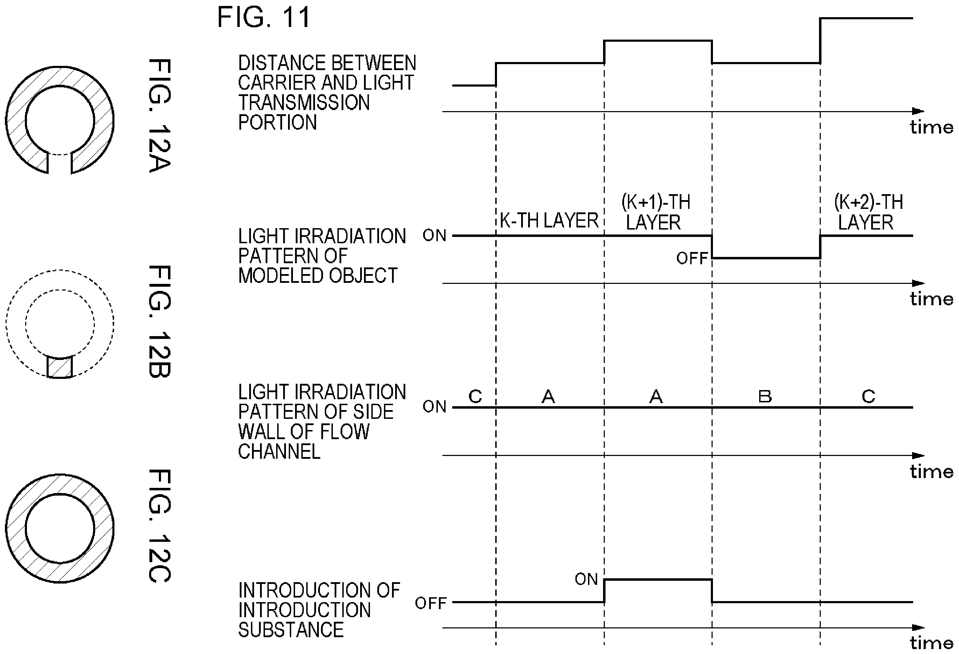

Fig. 12A to Fig. 12C are views illustrating the light irradiation pattern for modeling the side wall 235 of the flow channel 230. Fig. 12A is an example of a pattern for forming the notch portion 236, and, hereinafter, will be referred to as a pattern A. Fig. 12B is an example of a pattern for filling the notch portion 236, and, hereinafter, will be referred to as a pattern B. Fig. 12C is an example of a pattern for forming the side wall 235 at a timing of extending the flow channel 230 without forming the notch portion 236, and, hereinafter, will be referred to as a pattern C. "A", "B", and "C" denoted in Figs. 8 to 11 correspond to the patterns A, B, and C, respectively.

Although Figs. 12A to 12C illustrate an example in which the notch portion 236 is provided and filled, the present invention is not limited to the example, and a case where, instead of the notch portion 236, the opening portion 238 or the enlarged diameter portion 234 is provided and is filled is the same.

Fig. 8 is a timing chart illustrating a first example of the control performed by the control unit 140. In the example, the introduction substance is introduced while the light irradiation is performed on the k-th layer which is included in the modeled object 200. Before and after the light irradiation is performed on the k-th layer, a time in which the light irradiation is performed on the pattern A and a time in which the light irradiation is performed on the pattern B exist. When the light irradiation is performed on the pattern A, the notch portion 236 is provided in the vicinity of the tip end 232 of the flow channel 230. Further, when the light irradiation is performed on the pattern B after light irradiation is performed on the k-th layer, the notch portion 236 is filled. Further, when the light irradiation is performed on the (k+1) -th layer and the (k+2)-th layer of the modeled object 200, the flow channel 230 is extended by the pattern C.

In the example, a time in which the light irradiation is performed on the patterns A and B is additionally provided. Therefore, the notch portion 236 is formed, the k-th layer is modeled, and the notch portion 236 is filled, more reliably. On the other hand, a distance obtained when the light irradiation is performed on the k-th layer is maintained for a longer time than a distance obtained when another layer is formed. Note that, in the example of the drawing, although light irradiation is not performed on the pattern of the side wall 235 while the light irradiation is performed on the pattern of the k-th layer, the light irradiation may be continuously performed on the pattern A.

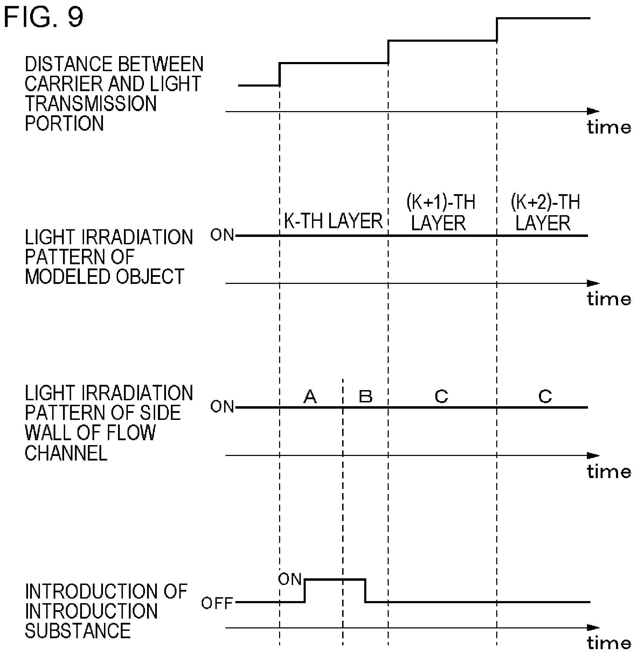

Fig. 9 is a timing chart illustrating a second example of the control performed by the control unit 140. In the example, the introduction substance is introduced at a part of the time in which the light irradiation is performed on the k-th layer which is included in the modeled object 200. Further, in the example, the distance corresponding to each layer is maintained for the same time. Specifically, the light irradiation performed on the pattern A is started together with start of the light irradiation performed on the k-th layer. Further, the introduction of the introduction substance is started at a time point in which a predetermined time t₁ elapses from the start of the light irradiation performed on the pattern A. At this time, the photocurable composition 20 is cured at the tip end 232 to an extent that the flow of the introduction substance can be affected, and thus the notch portion 236 is formed. In addition, at a time point in which a predetermined time t₂ elapses from the start of the light irradiation performed on the pattern A, the pattern of the side wall 235 is switched from the pattern A to the pattern B, and thus the notch portion 236 starts to be filled. Further, at a time point in which a predetermined time t₃ elapses from the start of the light irradiation performed on the pattern A, the introduction of the introduction substance is stopped. The times t₁ to t₃ can be determined by a preliminary test or the like. Further, the information indicating the times t₁ to t₃ is held in the storage unit 150 prior to modeling of the modeled object 200, and the control unit 140 can read the information and use the information for control.

According to the example, since the additional time for performing the light irradiation on the patterns A and B is not provided, a time in which the modeled object 200 is modeled can be shortened.

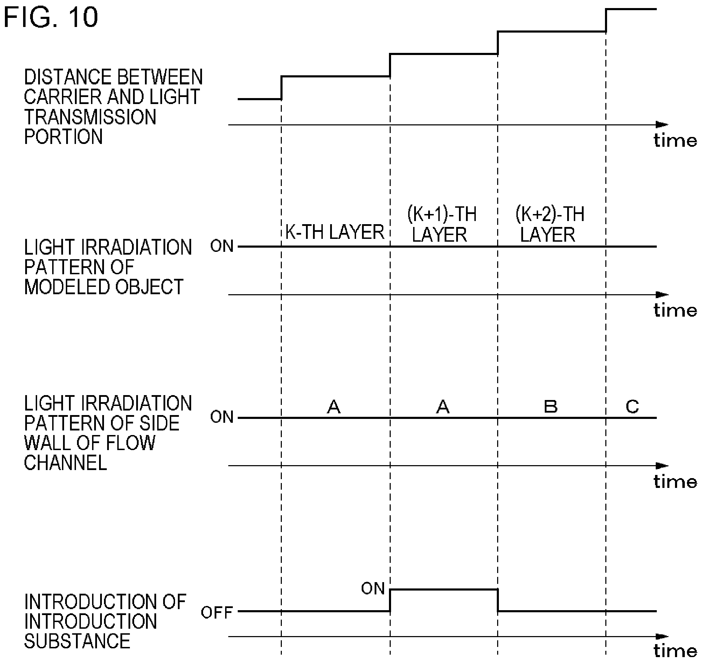

Fig. 10 is a timing chart illustrating a third example of the control performed by the control unit 140. In the example, while the light irradiation is performed on the k-th layer, the light irradiation is performed on the pattern A, and thus the notch portion 236 is formed. Further, the introduction substance is introduced while the light irradiation is performed on the (k+1) -th layer. Next, while the light irradiation is performed on the (k+2)-th layer, the light irradiation is performed on the pattern B, and thus the notch portion 236 is filled. According to the example, the notch portion 236 can be formed and filled without extending the time in which the modeled object 200 is modeled.

Note that, in the drawing, although an example in which the light irradiation is also performed on the pattern A while the light irradiation is performed on the (k+1)-th layer is illustrated, the light irradiation may not be performed on any of the patterns A, B, and C while the light irradiation is performed on the (k+1)-th layer.

Fig. 11 is a timing chart illustrating a fourth example of the control performed by the control unit 140. In the example, the distance between the carrier 120 and the light transmission portion 112 is temporarily shortened, and the light irradiation is performed on the pattern B at the shortened distance.

Specifically, while the light irradiation is performed on the k-th layer, the light irradiation is performed on the pattern A and the notch portion 236 is formed. Further, the introduction substance is introduced while the light irradiation is performed on the (k+1) -th layer. Next, after the light irradiation is performed on the (k+1) -th layer and before the light irradiation performed on the (k+2) -th layer, the light irradiation is performed on the pattern B to fill the notch portion 236. Here, the distance between the carrier 120 and the light transmission portion 112 at the time in which the light irradiation is performed on the pattern B is less than the distance at the time in which the light irradiation is performed on the (k+1)-th layer. Further, in the light irradiation performed on the next (k+2) -th layer, the distance between the carrier 120 and the light transmission portion 112 becomes longer than the distance obtained when the light irradiation is performed on the (k+1)-th layer. According to the example, it is possible to more reliably fill the notch portion 236 in a state where the carrier 120 and the light transmission portion 112 are close to each other.

Note that, although the example in which the light irradiation is also performed on the pattern A while the light irradiation is performed on the (k+1)-th layer is illustrated in the drawing, the light irradiation may not be performed on any of the patterns A, B, and C while the light irradiation is performed on the (k+1)-th layer.

Note that, although the case where the introduction substance is introduced into one layer of the modeled object 200 is described in the first to fourth examples, the introduction substance may be introduced into two or more layers.

In addition, although the example in which the distance between the carrier 120 and the light transmission portion 112 changes intermittently is described above, the distance between the carrier 120 and the light transmission portion 112 may continuously change.

Next, an operation and effect of the embodiment will be described. In the embodiment, the same operation and effect as at least any of the first and second embodiments may be obtained. In addition, even when the enlarged diameter portion 234 and the opening portion 238 are provided in the middle, the flow channel 230 can be extended without any influence thereafter.

### (Fifth Embodiment)

A three-dimensional modeling apparatus 10 according to a fifth embodiment is the same as the three-dimensional modeling apparatus 10 according to at least any of the first to fourth embodiments, except for points described below. The three-dimensional modeling apparatus 10 according to the embodiment includes an introduction control unit 160 that controls introduction of an introduction substance into a flow channel 230. A control unit 140 controls a position of a carrier 120 and an irradiation unit 130 to provide at least one of an enlarged diameter portion 234 and an opening portion 238 at a plurality of timings. Further, the introduction control unit 160 controls a timing of introducing the introduction substance into the flow channel 230 based on the plurality of timings.

In the embodiment, the control unit 140 controls the carrier 120 and the irradiation unit 130 to provide one or more flow channels 230. The control unit 140 can provide at least one of the enlarged diameter portion 234 and the opening portion 238 for one flow channel 230 at two or more different timings. Here, the enlarged diameter portion 234 and the opening portion 238 provided at a previous timing may or may not be filled as described in the fourth embodiment.

In addition, the control unit 140 may provide at least one of the enlarged diameter portion 234 and the opening portion 238 for the plurality of flow channels 230 at two or more different timings.

The introduction substance introduced at the plurality of timings may include two or more types of introduction substances. In this manner, it is possible to cause different introduction substances to act on a plurality of regions, in which light irradiation timings are different, of a modeled object 200.

Next, an operation and effect of the embodiment will be described. In the embodiment, the same operation and effect as at least any of the first and second embodiments may be obtained. In addition, it is possible to cause the introduction substances to act on the plurality of region, in which the light irradiation timings are different, of the modeled object 200.

### (Sixth Embodiment)

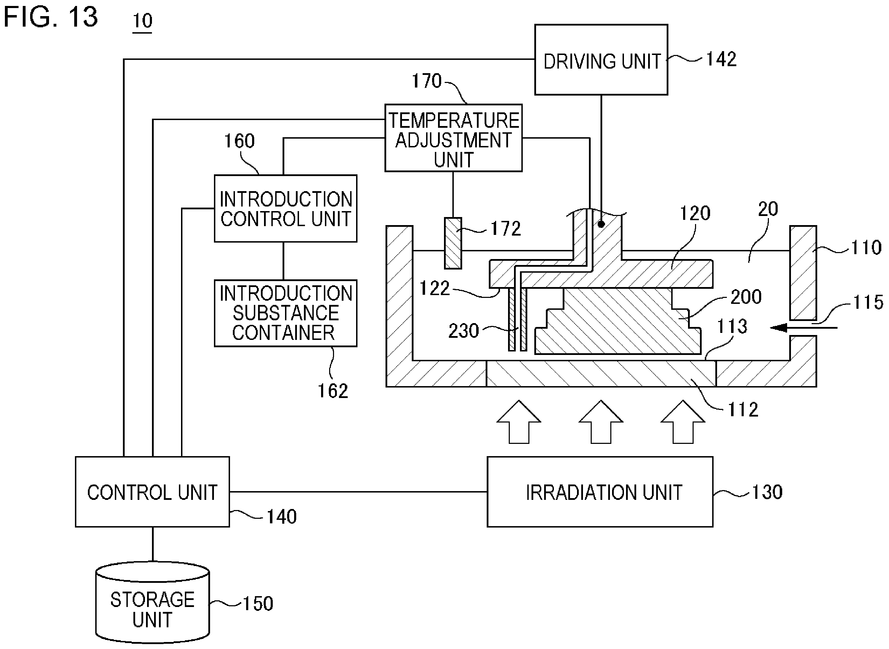

Fig. 13 is a diagram illustrating a configuration of a three-dimensional modeling apparatus 10 according to a sixth embodiment. The three-dimensional modeling apparatus 10 according to the embodiment is the same as the three-dimensional modeling apparatus 10 according to at least any of the first to fifth embodiments except that an introduction substance whose temperature is lower than that of a photocurable composition 20 in a container 110 is introduced into at least one flow channel 230. Description will be performed in detail below.

The three-dimensional modeling apparatus 10 according to the embodiment includes a temperature adjustment unit 170 and a temperature sensor 172. The temperature sensor 172 detects a temperature of the photocurable composition 20 in a container 110. Further, the temperature adjustment unit 170 adjusts the temperature of the introduction substance introduced into the flow channel 230. The temperature adjustment unit 170 is a heater or a cooling apparatus. The cooling apparatus is, for example, an apparatus that performs cooling by blowing air, a Peltier element, or water cooling.

There are cases where reaction heat is generated when the photocurable composition 20 is cured, and thus temperatures of the photocurable composition 20 and the modeled object 200 rise. If so, the photocurable composition 20 in the middle of being modeled sticks to the surface 113 or the modeled object 200 is easily warped or deformed. In contrast, in the three-dimensional modeling apparatus 10 according to the embodiment, the introduction substance whose temperature is low is introduced into a specific region whose temperature easily rises, and thus it is possible to cause the above problem to hardly occur.

For example, a control unit 140 controls a position of a carrier 120 and an irradiation unit 130 such that at least one of an enlarged diameter portion 234 and an opening portion 238 is provided at least when modeling a first region having the largest cross-sectional area parallel to a surface 113 of a light transmission portion 112 on a side of the carrier 120 in the modeled object 200.

In the first region, a large amount of the photocurable composition 20 reacts, so that the temperature rise particularly easily occurs. Therefore, it is particularly effective to introduce the introduction substance whose temperature is low into the first region.

Next, an operation and effect of the embodiment will be described. In the embodiment, the same operation and effect as at least any of the first and second embodiments may be obtained. In addition, it is possible to suppress the deformation or the like of the modeled object 200 by suppressing the temperature of the photocurable composition 20 from rising.

### (Seventh Embodiment)

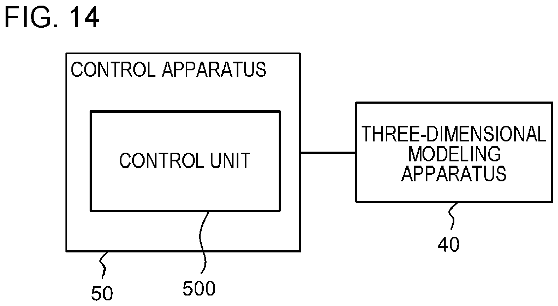

Fig. 14 is a block diagram illustrating a configurations of a three-dimensional modeling apparatus 40 and a control apparatus 50 according to a seventh embodiment. The control apparatus 50 according to the embodiment is a control apparatus of the three-dimensional modeling apparatus 40. The three-dimensional modeling apparatus 40 is similar to the three-dimensional modeling apparatus 40 according to the first embodiment, and includes a container 110, a carrier 120, and an irradiation unit 130. The container 110 accommodates a photocurable composition 20 and at least a part of which includes a light transmission portion 112. The carrier 120 is configured to have a variable distance with respect to the light transmission portion 112. The irradiation unit 130 irradiates the photocurable composition 20 between the carrier 120 and the light transmission portion 112 with light via the light transmission portion 112. In addition, the control apparatus 50 includes a control unit 500. The control unit 500 controls a position of the carrier 120 and the irradiation unit 130 to form a modeled object 200 obtained by curing the photocurable composition 20. In addition, the control unit 500 controls the position of the carrier 120 and the irradiation unit 130 to form at least a part of a flow channel 230 connected to an outside of the container 110 by curing the photocurable composition 20 in a region irradiated with light, and controls the position of the carrier 120 and the irradiation unit 130 to at least temporarily provide at least one of an enlarged diameter portion 234 and an opening portion 238. Here, the enlarged diameter portion 234 is a part in which an inner diameter of the flow channel 230 is widened toward a tip end 232 of the flow channel 230 on a side of a light transmission portion 112. The opening portion 238 is located on a side wall in a vicinity of the tip end 232 of the flow channel 230.

The control unit 500 according to the embodiment is the same as the control unit 140 according to at least any of the first to sixth embodiments.

In the embodiment, the same operation and effect as at least any of the first and second embodiments may be obtained.

Although the embodiments of the present invention are described hereinabove with reference to the drawings, the embodiments are merely examples of the present invention, and various configurations other than the above can be adopted. For example, each of the above-described embodiments can be combined within a scope in which content does not conflict with each other.

Hereinafter, examples of reference forms will be additionally described.
1-1. A three-dimensional modeling apparatus including
   a container that accommodates a photocurable composition and at least a part of which includes a light transmission portion,
   a carrier that is configured to have a variable distance with respect to the light transmission portion,
   an irradiation unit that irradiates the photocurable composition between the carrier and the light transmission portion with light via the light transmission portion, and
   a control unit that controls a position of the carrier and the irradiation unit to form a modeled object obtained by curing the photocurable composition,
   in which the control unit
   controls the position of the carrier and the irradiation unit to form at least a part of a flow channel connected to an outside of the container by curing the photocurable composition in a region irradiated with the light, and
   controls the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.
1-2. In the three-dimensional modeling apparatus of 1-1,
   at least a part of the flow channel is provided separately from the modeled object.
1-3. In the three-dimensional modeling apparatus of 1-1,
   at least a part of the flow channel is provided inside the modeled object.
1-4. In the three-dimensional modeling apparatus of any one of 1-1 to 1-3,
   the modeled object includes a plurality of layers formed for the each distance,
   a width w from an end farthest from the tip end to the tip end in at least one of the enlarged diameter portion and the opening portion is equal to or less than a size corresponding to five layers, and
   the control unit controls the position of the carrier and the irradiation unit to fill at least one of the enlarged diameter portion and the opening portion.
1-5. In the three-dimensional modeling apparatus of any one of 1-1 to 1-4,
   an introduction substance having fluidity is introduced into a region irradiated with the light through the flow channel.
1-6. The three-dimensional modeling apparatus of 1-5, further includes
   an introduction control unit that controls introduction of the introduction substance into the flow channel,
   in which the control unit controls the position of the carrier and the irradiation unit to provide at least one of the enlarged diameter portion and the opening portion at a plurality of timings, and
   in which the introduction control unit controls a timing of introducing the introduction substance into the flow channel based on the plurality of timings.
1-7. In the three-dimensional modeling apparatus of 1-6,
   the introduction substance introduced at the plurality of timings includes two or more types of the introduction substance.
1-8. In the three-dimensional modeling apparatus of any one of 1-5 to 1-7,
   the control unit controls the position of the carrier and the irradiation unit to provide a plurality of the flow channels.
1-9. In the three-dimensional modeling apparatus of any one of 1-5 to 1-8,
   the introduction substance whose temperature is lower than that of the photocurable composition in the container is introduced into at least one of the flow channels.
1-10. In the three-dimensional modeling apparatus of any one of 1-1 to 1-9,
   the control unit controls the position of the carrier and the irradiation unit such that at least one of the enlarged diameter portion and the opening portion is provided in the vicinity of the tip end at least when modeling a region having a largest cross-sectional area parallel to a surface of the light transmission portion on a side of the carrier in the modeled object.
1-11. In the three-dimensional modeling apparatus of any one of 1-1 to 1-10,
   the enlarged diameter portion is at least temporarily provided, and
   in the enlarged diameter portion, an inner diameter of the flow channel is anisotropically widened with respect to an axis of the flow channel.
2-1. A control apparatus of a three-dimensional modeling apparatus
   in which the three-dimensional modeling apparatus includes
   a container that accommodates a photocurable composition and at least a part of which includes a light transmission portion,
   a carrier that is configured to have a variable distance with respect to the light transmission portion, and
   an irradiation unit that irradiates the photocurable composition between the carrier and the light transmission portion with light via the light transmission portion,
   the control apparatus including a control unit that controls a position of the carrier and the irradiation unit to form a modeled object obtained by curing the photocurable composition,
   in which the control unit
   controls the position of the carrier and the irradiation unit to form at least a part of a flow channel connected to an outside of the container by curing the photocurable composition in a region irradiated with the light, and
   controls the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.
2-2. In the control apparatus of 2-1,
   at least a part of the flow channel is provided separately from the modeled object.
2-3. In the control apparatus of 2-1,
   at least a part of the flow channel is provided inside the modeled object.
2-4. In the control apparatus of any one of 2-1 to 2-3,
   the modeled object includes a plurality of layers formed for the each distance,
   a width w from an end farthest from the tip end to the tip end in at least one of the enlarged diameter portion and the opening portion is equal to or less than a size corresponding to five layers, and
   the control unit controls the position of the carrier and the irradiation unit to fill at least one of the enlarged diameter portion and the opening portion.
2-5. In the control apparatus of any one of 2-1 to 2-4,
   an introduction substance having fluidity is introduced into a region irradiated with the light through the flow channel.
2-6. In the control apparatus of 2-5,
   the three-dimensional modeling apparatus further includes an introduction control unit that controls introduction of the introduction substance into the flow channel,
   the control unit controls the position of the carrier and the irradiation unit to provide at least one of the enlarged diameter portion and the opening portion at a plurality of timings, and
   the introduction control unit controls a timing of introducing the introduction substance into the flow channel based on the plurality of timings.
2-7. In the control apparatus of 2-6,
   the introduction substance introduced at the plurality of timings includes two or more types of the introduction substance.
2-8. In the control apparatus of any one of 2-5 to 2-7,
   the control unit controls the position of the carrier and the irradiation unit to provide a plurality of the flow channels.
2-9. In the control apparatus of any one of 2-5 to 2-8,
   the introduction substance whose temperature is lower than that of the photocurable composition in the container is introduced into at least one of the flow channels.
2-10. In the control apparatus of any one of 2-1 to 2-9,
   the control unit controls the position of the carrier and the irradiation unit such that at least one of the enlarged diameter portion and the opening portion is provided in the vicinity of the tip end at least when modeling a region having a largest cross-sectional area parallel to a surface of the light transmission portion on a side of the carrier in the modeled object.
2-11. In the control apparatus of any one of 2-1 to 2-10,
   the enlarged diameter portion is at least temporarily provided, and
   in the enlarged diameter portion, an inner diameter of the flow channel is anisotropically widened with respect to an axis of the flow channel.
3-1. A method for manufacturing a modeled object using a three-dimensional modeling apparatus,
   in which the three-dimensional modeling apparatus includes
   a container that accommodates a photocurable composition and at least a part of which includes a light transmission portion,
   a carrier that is configured to have a variable distance with respect to the light transmission portion,
   an irradiation unit that irradiates the photocurable composition between the carrier and the light transmission portion with light via the light transmission portion, and
   a control unit that controls a position of the carrier and the irradiation unit to form the modeled object obtained by curing the photocurable composition, the method including:
   by the control unit
   controlling the position of the carrier and the irradiation unit to form at least a part of a flow channel connected to an outside of the container by curing the photocurable composition in a region irradiated with the light, and
   controlling the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.
3-2. In the method for manufacturing a modeled object of 3-1,
   at least a part of the flow channel is provided separately from the modeled object.
3-3. In the method for manufacturing a modeled object of 3-1, at least a part of the flow channel is provided inside the modeled object.
3-4. In the method for manufacturing a modeled object of any one of 3-1 to 3-3,
   the modeled object includes a plurality of layers formed for the each distance,
   a width w from an end farthest from the tip end to the tip end in at least one of the enlarged diameter portion and the opening portion is equal to or less than a size corresponding to five layers, and
   the control unit controls the position of the carrier and the irradiation unit to fill at least one of the enlarged diameter portion and the opening portion.
3-5. In the method for manufacturing a modeled object of any one of 3-1 to 3-4,
   an introduction substance having fluidity is introduced into a region irradiated with the light through the flow channel.
3-6. In the method for manufacturing a modeled object of 3-5,
   the three-dimensional modeling apparatus further includes an introduction control unit that controls introduction of the introduction substance into the flow channel,
   the control unit controls the position of the carrier and the irradiation unit to provide at least one of the enlarged diameter portion and the opening portion at a plurality of timings, and
   the introduction control unit controls a timing of introducing the introduction substance into the flow channel based on the plurality of timings.
3-7. In the method for manufacturing a modeled object of 3-6,
   the introduction substance introduced at the plurality of timings includes two or more types of the introduction substance.
3-8. In the method for manufacturing a modeled object of any one of 3-5 to 3-7,
   the control unit controls the position of the carrier and the irradiation unit to provide a plurality of the flow channels.
3-9. In the method for manufacturing a modeled object of any one of 3-5 to 3-8,
   the introduction substance whose temperature is lower than that of the photocurable composition in the container is introduced into at least one of the flow channels.
3-10. In the method for manufacturing a modeled object of any one of 3-1 to 3-9,
   the control unit controls the position of the carrier and the irradiation unit such that at least one of the enlarged diameter portion and the opening portion is provided in the vicinity of the tip end at least when modeling a region having a largest cross-sectional area parallel to a surface of the light transmission portion on a side of the carrier in the modeled object.
3-11. In the method for manufacturing a modeled object of any one of 3-1 to 3-10,
   the enlarged diameter portion is at least temporarily provided, and
   in the enlarged diameter portion, an inner diameter of the flow channel is anisotropically widened with respect to an axis of the flow channel.

This application claims the priority on the basis of Japanese Patent Application No. 2018-128299 applied on July 5, 2018, and takes in those the indications of all here.

## Claims

1. A three-dimensional modeling apparatus comprising:
a container that accommodates a photocurable composition and at least a part of which includes a light transmission portion;
a carrier that is configured to have a variable distance with respect to the light transmission portion;
an irradiation unit that irradiates the photocurable composition between the carrier and the light transmission portion with light via the light transmission portion; and
a control unit that controls a position of the carrier and the irradiation unit to form a modeled object obtained by curing the photocurable composition,
wherein the control unit
controls the position of the carrier and the irradiation unit to form at least a part of a flow channel connected to an outside of the container by curing the photocurable composition in a region irradiated with the light, and
controls the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.

2. The three-dimensional modeling apparatus according to claim 1,
wherein at least a part of the flow channel is provided separately from the modeled object.

3. The three-dimensional modeling apparatus according to claim 1,
wherein at least a part of the flow channel is provided inside the modeled object.

4. The three-dimensional modeling apparatus according to any one of claims 1 to 3,
wherein the modeled object includes a plurality of layers formed for the each distance,
wherein a width w from an end farthest from the tip end to the tip end in at least one of the enlarged diameter portion and the opening portion is equal to or less than a size corresponding to five layers, and
wherein the control unit controls the position of the carrier and the irradiation unit to fill at least one of the enlarged diameter portion and the opening portion.

5. The three-dimensional modeling apparatus according to any one of claims 1 to 4,
wherein an introduction substance having fluidity is introduced into a region irradiated with the light through the flow channel.

6. The three-dimensional modeling apparatus according to claim 5, further comprising:
an introduction control unit that controls introduction of the introduction substance into the flow channel,
wherein the control unit controls the position of the carrier and the irradiation unit to provide at least one of the enlarged diameter portion and the opening portion at a plurality of timings, and
wherein the introduction control unit controls a timing of introducing the introduction substance into the flow channel based on the plurality of timings.

7. The three-dimensional modeling apparatus according to claim 6,
wherein the introduction substance introduced at the plurality of timings includes two or more types of the introduction substance.

8. The three-dimensional modeling apparatus according to any one of claims 5 to 7,
wherein the control unit controls the position of the carrier and the irradiation unit to provide a plurality of the flow channels.

9. The three-dimensional modeling apparatus according to any one of claims 5 to 8,
wherein the introduction substance whose temperature is lower than that of the photocurable composition in the container is introduced into at least one of the flow channels.

10. The three-dimensional modeling apparatus according to any one of claims 1 to 9,
wherein the control unit controls the position of the carrier and the irradiation unit such that at least one of the enlarged diameter portion and the opening portion is provided in the vicinity of the tip end at least when modeling a region having a largest cross-sectional area parallel to a surface of the light transmission portion on a side of the carrier in the modeled object.

11. The three-dimensional modeling apparatus according to any one of claims 1 to 10,
wherein the enlarged diameter portion is at least temporarily provided, and
wherein, in the enlarged diameter portion, an inner diameter of the flow channel is anisotropically widened with respect to an axis of the flow channel.

12. A control apparatus of a three-dimensional modeling apparatus in which the three-dimensional modeling apparatus includes
a container that accommodates a photocurable composition and at least a part of which includes a light transmission portion,
a carrier that is configured to have a variable distance with respect to the light transmission portion, and
an irradiation unit that irradiates the photocurable composition between the carrier and the light transmission portion with light via the light transmission portion,
the control apparatus comprising:
a control unit that controls a position of the carrier and the irradiation unit to form a modeled object obtained by curing the photocurable composition,
wherein the control unit
controls the position of the carrier and the irradiation unit to form at least a part of a flow channel connected to an outside of the container by curing the photocurable composition in a region irradiated with the light, and
controls the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.

13. A method for manufacturing a modeled object using a three-dimensional modeling apparatus,
in which the three-dimensional modeling apparatus includes
a container that accommodates a photocurable composition and at least a part of which includes a light transmission portion,
a carrier that is configured to have a variable distance with respect to the light transmission portion,
an irradiation unit that irradiates the photocurable composition between the carrier and the light transmission portion with light via the light transmission portion, and
a control unit that controls a position of the carrier and the irradiation unit to form the modeled object obtained by curing the photocurable composition, the method comprising:
by the control unit
controlling the position of the carrier and the irradiation unit to form at least a part of a flow channel connected to an outside of the container by curing the photocurable composition in a region irradiated with the light; and
controlling the position of the carrier and the irradiation unit to at least temporarily provide at least one of an enlarged diameter portion, in which an inner diameter of the flow channel is widened toward a tip end of the flow channel on a side of the light transmission portion, and an opening portion which is located on a side wall of the flow channel in a vicinity of the tip end.
